(19) Europäisches Patentamt
European Patent Office
Office européen des brevets

(11) Veröffentlichungsnummer: **0 197 892**
**B1**

(12) # EUROPÄISCHE PATENTSCHRIFT

(45) Veröffentlichungstag der Patentschrift: **18.10.89**

(51) Int. Cl.⁴: **C 08 G 59/18**, C 08 G 59/40, C 08 G 59/68

(21) Anmeldenummer: **86810152.8**

(22) Anmeldetag: **27.03.86**

(54) **Härtbare Gemische.**

(30) Priorität: **02.04.85 GB 8508628**

(43) Veröffentlichungstag der Anmeldung: **15.10.86 Patentblatt 86/42**

(45) Bekanntmachung des Hinweises auf die Patenterteilung: **18.10.89 Patentblatt 89/42**

(84) Benannte Vertragsstaaten: **AT CH DE FR GB IT LI NL SE**

(56) Entgegenhaltungen:
**EP-A- 0 103 804**
**DE-A- 2 505 250**

(73) Patentinhaber: **CIBA-GEIGY AG, Klybeckstrasse 141, CH-4002 Basel (CH)**

(72) Erfinder: **Bagga, Madan Mohan, Dr., 56, Hurrell Road, Cambridge CB4 3RH (GB)**
Erfinder: **Bull, Christopher Hubert, 135 Shelford Road, Trumpington Cambridge CB2 2ND (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft härtbare Gemische auf Basis von Epoxidharzen und deren Verwendung als Klebstoffe, Dichtungsmassen, Laminierharze und Beschichtungsmittel.

Die Verwendung von Epoxidharzen als Klebstoffe und Beschichtungsmittel ist seit langem bekannt. Viele Epoxidharzhärtungsmittel sind bei Raumtemperatur reaktiv und können somit erst kurz vor der Anwendung mit dem Epoxidharz vermischt werden. Andere Härter, die im Gemisch mit Epoxidharzen bei Raumtemperatur unreaktiv sind und zu härten beginnen, wenn das Gemisch über eine bestimmte Schwellentemperatur erhitzt wird, werden als latente Härtungsmittel bezeichnet. Solche Härter sind bekannt und im Handel erhältlich und umfassen chemisch verschiedene Verbindungsklassen, wie Polycarbonsäurehydrazide, Aminotriazine, Bortrifluoridkomplexe, Komplexe aus Bortrichlorid und tertiären Aminen, Polyphenole, Polycarbonsäuren, Dicyandiamid, Imidazole und organische Metallverbindungen.

Zum Härten eines ein Epoxidharz und einen latenten Härter enthaltenden Gemisches werden im allgemeinen 15 min bis 1 h bei 180 °C benötigt. Die Härtungszeit kann durch Zugabe eines Beschleunigers, der die Lagerstabilität des härtbaren Gemisches wenig verändert, verkürzt werden. Wenn Dicyandiamid als Härter eingesetzt wird, kann beispielsweise als Beschleuniger ein substituierter Phenylharnstoff, wie N-(4-Chlorphenyl)-N,N'-dimethylharnstoff, eingesetzt werden. Eine schnellere Härtung kann auch durch Anwendung höherer Härtungstemperaturen, wie etwa 200 °C, erreicht werden, wobei bei Verwendung dieses Beschleunigertyps flüchtige Dämpfe entstehen, die im härtbaren Gemisch Blasenbildung verursachen. Die Gegenwart von Blasen in einer Klebschicht stellt einen schweren Nachteil dar, weil mit einer solchen Klebschicht eine schwächere Bindung erreicht wird. Analog können mit einem Blasen enthaltenden Gemisch nur ungenügende Beschichtungen oder Laminate erhalten werden. In der Praxis wird daher ein solches Gemisch unterhalb von 150 °C ausgehärtet, wobei eine längere Härtungszeit in Kauf genommen werden muß.

Bestrebungen in der Automobilindustrie, das Punktschweissen von einigen Teilen durch Verklebungen zu ersetzen, erfordern Klebstoffe, die bei hohen Temperaturen innerhalb weniger Sekunden sich verfestigen und Verklebungen mit hoher Scherfestigkeit ergeben. Zur Aufrechterhaltung der Produktionsgeschwindigkeit ist es wichtig, daß die zu verbindenden Teile schnell erhitzt werden können. Mittels der Induktionsheizung werden in wenigen Sekunden hohe Temperaturen erreicht. Eine genaue Temperaturkontrolle wird aber durch geometrisch unterschiedliche Teile erschwert. Beschleuniger, welche bei hohen Temperaturen Blasenbildung verursachen, sind daher für solche Anwendungen ungeeignet.

Epoxidharze ergeben Verklebungen mit hoher Festigkeit und sind daher für Anwendungen in der Automobilindustrie geeignet. Die gebräuchlichen Epoxidharzformulierungen weisen aber folgende Nachteile auf: Ungenügende Lagerstabilität bei Raumtemperatur, ungenügende Härtungsgeschwindigkeit beim Erhitzen sowie Bildung von Blasen bei hohen Härtungstemperaturen. Es wurde nun gefunden, daß man diese Nachteile überwinden kann, indem man ein härtbares Epoxidharzgemisch verwendet, enthaltend ein Stickstoff enthaltendes latentes Härtungsmittel, insbesondere eines, das Amino-, Imino-, Amido-, Imido-, Triazin- oder Hydrazidgruppen aufweist, und als Beschleuniger eine feste Lösung aus einem phenolischen Polymer und einer hochsiedenden basischen Stickstoffverbindung.

Die Verwendung von Phenol-Aminsalzen als latente Härtungsmittel für Epoxidharze ist beispielsweise aus den US-Patenten 3519576 und 3520905 bekannt, worin kristalline Polyphenolatsalze aus Polyaminen und Polyphenolen beschrieben werden. Die Verwendung der Salze als Beschleuniger bei der Härtung von Epoxidharzen wird in den genannten US-Patenten nicht offenbart.

Der Zusatz von stöchiometrischen Mengen eines phenolischen Polymers zu Epoxidharzen, um diese zu härten, ist bekannt, sowie die Verwendung von Aminen als Härtungsbeschleuniger bei diesem Härtungsverfahren. In der Japanischen Kokai No. 57.182316, berichtet in Chemical Abstracts, 98: 144488 m, wird beispielsweise eine Zusammensetzung offenbart, die ein Poly(vinylphenol), ein Epoxidharz und als Härtungsbeschleuniger ein organisches Amin und Dicyandiamid enthält. Die vorherige Herstellung eines Salzes aus dem Phenol und dem Amin wird nicht beschrieben.

Die vorliegende Erfindung betrifft härtbare Gemische, enthaltend

(a) ein Epoxidharz,

(b) ein Stickstoff enthaltendes latentes Härtungsmittel für Epoxidharze und

(c) als Härtungsbeschleuniger eine feste Lösung aus einer Stickstoffbase mit einem Siedepunkt oberhalb von 130 °C, vorzugsweise oberhalb 150 °C, und einem phenolischen Polymer, das ein Additionspolymer aus einem einen ungesättigten Substituenten aufweisenden Phenol ist, wobei die feste Lösung als Pulver in der Mischung aus (a) und (b) dispergiert vorliegt.

Der Ausdruck «feste Lösung» bezüglich des Härtungsbeschleunigers (c) steht für die Kombination der Stickstoffbase mit dem phenolischen Polymer in einem festen Einphasen-System. Es ist möglich, daß zwischen den beiden Komponenten etwas Salzbildung vorhanden ist. Auch ist es möglich, daß zwischen beiden Komponenten eine Wasserstoffbrückenbindung vorliegt. Die festen Lösungen werden gewöhnlich nicht unter Verwendung von stöchiometrischen Mengen hergestellt, so daß eine Komponente im Überschuß vorliegt. Der Ausdruck «feste Lösung» umfasst alle Produkte, ob sie nun Salze zwischen der Base und dem phenolischen Polymer oder eine Komponente im Überschuß enthalten. Die feste Lösung (c), die in der Literatur noch nicht beschrieben wurde, stellt

ebenfalls einen Gegenstand vorliegender Erfindung dar.

Als Epoxidharze (a) werden in den erfindungsgemäßen Gemischen bevorzugt solche verwendet, die mindestens zwei direkt an Sauerstoff-, Stickstoff- oder Schwefelatome gebundene Gruppen der Formel I

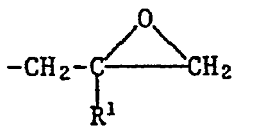

(I)

enthalten, wobei $R^1$ ein Wasserstoffatom oder eine Methylgruppe darstellt.

Als Beispiele von solchen Harzen seien genannt: Polyglycidyl- und Poly(β-methylglycidyl)-ester, erhältlich durch Umsetzung von Verbindungen mit zwei oder mehr Carbonsäuregruppen pro Molekül mit Epichlorhydrin, Glycerindichlorhydrin oder β-Methylepichlorhydrin in Gegenwart von Alkali. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimerisierter oder trimerisierter Linolsäure, von cycloaliphatischen Polycarbonsäure, wie Tetrahydrophthalsäure, 4-Methyltetrahydrophthalsäure, Hexahydrophthalsäure und 4-Methylhexahydrophthalsäure, oder von aromatischen Polycarbonsäuren, wie Phthalsäure, Isophthalsäure und Terephthalsäure, abgeleitet sein.

Weitere Beispiele sind Polyglycidyl- und Poly(β-methylglycidyl)-ether, erhältlich durch Umsetzung von Verbindungen mit mindestens zwei freien alkoholischen Hydroxylgruppen und/oder phenolischen Hydroxylgruppen pro Molekül mit geeigneten Epichlorhydrinen unter alkalischen Bedingungen oder aber in Gegenwart von sauren Katalysatoren, gefolgt von einer Behandlung mit Alkali. Solche Ether können aus acyclischen Alkoholen, wie Ethylenglykol, Diethylenglykol und höheren Poly(oxyethylen)glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen, von cycloaliphatischen Alkoholen, wie 1,3- und 1,4-Cyclohexandiol, Bis(4-hydroxycyclohexyl)methan, 2,2-Bis-(4-hydroxycyclohexyl)propan und 1,1-Bis-(hydroxymethyl)-cyclohex-3-en, sowie von Alkoholen mit aromatischen Kernen, wie N,N-Bis-(2-hydroxyethyl)-anilin und p,p'-Bis-(2-hydroxymethylamino)diphenylmethan, abgeleitet sein. Sie können sich auch von einkernigen Phenolen, wie Resorcin und Hydrochinon, und von mehrkernigen Phenolen, wie Bis-(4-hydroxyphenyl)methan, 4,4''-Dihydroxydiphenyl, Bis-(4-hydroxyphenyl)sulfon, 1,1,2,2-Tetrakis-(4-hydroxyphenyl)ethan, 2,2-Bis-(4-hydroxyphenyl)propan, 2,2-Bis-(3,5-dibrom-4-hydroxyphenyl)propan und Novolaken aus Aldehyden, wie Formaldehyd, Acetaldehyd, Chloral und Furfurylaldehyd, und Phenolen wie dem unsubstituierten Phenol und Phenolen, die im Ring durch Chloratome oder Alkylgruppen mit bis zu 9 C-Atomen substituiert sind, wie 4-Chlorphenol, 2-Methylphenol und 4-tert.-Butylphenol, ableiten.

Beispiele von Poly(N-glycidyl)verbindungen sind Verbindungen, die durch Dehydrochlorierung von Umsetzungsprodukten aus Epichlorhydrin und Aminen mit mindestens zwei Aminwasserstoffatomen erhalten werden, wie Anilin, n-Butylamin, Bis-(4-aminophenyl)methan, m-Xylylendiamin und Bis-(4-methylaminophenyl)methan; Triglycidylisocyanurat und N,N'-Diglycidylderivate von cyclischen Alkylenharnstoffen, wie Ethylenharnstoff und 1,3-Propylenharnstoff, wie Hydantoine, wie 5,5-Dimethylhydantoin.

Beispiele von Poly(S-glycidyl)verbindungen sind die S-Glycidylderivate von Dithiolen, wie Ethan-1,2-dithiol und Bis-(4-mercaptomethylphenyl)ether.

Es können auch Epoxidharze verwendet werden, bei denen die 1,2-Epoxidgruppen an verschiedene Heteroatome gebunden sind, z.B. das N,N,O-Triglycidylderivat von 4-Aminophenol, der Glycidyletherglycidylester von Salicylsäure, N-Glycidyl-N'-(2-glycidyloxypropyl)-5,5-dimethylhydantoin und 2-Glycidyloxy-1,3-bis(5,5-dimethyl-1-glycidylhydantoin-3-yl)propan.

Gewünschtenfalls können auch Gemische verschiedener Epoxidharze verwendet werden.

Bevorzugte Epoxidharze sind Polyglycidylether, Polyglycidylester, N,N'-Diglycidylhydantoine und Poly(N-glycidyl)derivate von aromatischen Aminen. Besonders bevorzugte Harze sind Polyglycidylether von 2,2-Bis-(4-hydroxyphenyl)propan oder Bis-(4-hydroxyphenyl)methan sowie Polyglycidylether von Novolaken aus Formaldehyd und Phenol oder Phenolen, die im Ring durch ein Chloratom oder eine Alkylgruppe mit bis zu 9 C-Atomen substituiert sind, mit einem 1,2-Epoxidgehalt von mindestens 0,5 Äquivalenten/kg, Bis-[4-(diglycidylamino)phenyl]methan und p-(Diglycidylamino)phenylglycidylether.

Das Stickstoff enthaltende Härtungsmittel (b) in den erfindungsgemässen Gemischen kann jede Substanz sein, die gegenüber Epoxidharze unterhalb der sogenannten Schwellentemperatur inert ist, die gewöhnlich bei 80 °C, vorzugsweise 100 °C oder darüber, liegt, aber oberhalb der Schwellentemperatur schnell mit dem Epoxidharz reagiert und die Härtung bewirkt. Solche Substanzen sind bekannt und im Handel erhältlich, wie beispielsweise Bortrifluorid-Amin- und Bortrichlorid-Amin-Komplexe, Dicyandiamin, Melamin, Diallylmelamin, Guanamine, wie Acetoguanamin und Benzoguanamin, Aminotriazole, wie 3-Amino-1,2,4-triazol, Hydrazide, wie Adipinsäuredihydrazid, Stearinsäuredihydrazid, Isophthalsäuredihydrazid, Semicarbazide, Cyanacetamid und aromatische Polyamine, wie Diaminodiphenylsulfone. Die Verwendung von Dicyandiamid, Isophthalsäuredihydrazid, Adipinsäuredihydrazid und 4,4'-Diaminodiphenylsulfon ist besonders bevorzugt.

Die feste Lösung (c), die in den erfindungsgemäßen Gemischen als Beschleuniger verwendet wird, wird vor dem Beimischen zum Harz (a) und Härtungsmittel (b) separat hergestellt und gepulvert. Wird dagegen versucht, die feste Lösung (c) in situ in der Epoxidharzmischung herzustellen, wird keine lagerstabile Epoxidharzmischung erhalten.

Das phenolische Polymer, das zur Herstellung der festen Lösung (c) verwendet wird, enthält mehr als zwei wiederkehrende Einheiten, wobei mindestens eine phenolische Hydroxylgruppe pro Einheit vorhanden sein muß. Solche Polymere können Homopolymere oder Copolymere eines Phenols mit einem ungesättigten Substituent sein.

Als Beispiele solcher Polymere seien genannt: Homopolymere von allylsubstituierten Phenolen, wie 2-Allylphenol und 4-Allylphenol, Homopolymere von Phenolen mit Acrylsäuresubstituenten, zum Beispiel Phenole, welche die Reaktionsprodukte eines Säurehalogenids einer phenolischen Hydroxylgruppe enthaltenden Carbonsäure, wie Salicylsäure oder p-Hydroxybenzoesäure, mit einem Hydroxylalkylacrylat oder -methacrylat, wie 2-Hydroxyethylmethacrylat, Homopolymere von vinyl- oder 1-propenylsubstituierten Phenolen, wie o-Vinylphenol, m-Vinylphenol, p-Vinylphenol und halogenierte Derivate davon, o-(1-Propenyl)-phenol, m-(1-Propenyl)-phenol, p-(1-Propenyl)-phenol und halogenierte Derivate davon, Copolymere aus einem der beispielsweise genannten Phenole mit wenigstens einem anderen polymerisierbaren, ethylenisch ungesättigten Monomer, wie beispielsweise Styrol, α-Methylstyrol, 4-Bromstyrol und 4-Methylstyrol, ein Acrylsäureester, wie ein Alkylacrylat oder -methacrylat, ein Hydroxyalkylacrylat oder -methacrylat oder ein Vinylester, wie Vinylacetat. Es können auch Mischungen von zwei oder mehreren der zuvor genannten Homo- oder Copolymeren eingesetzt werden. Die Additionshomopolymeren und -copolymeren von ungesättigten Phenolen können nach gebräuchlichen Polymerisationsverfahren hergestellt werden, entweder von den ungesättigten Phenolen selbst oder deren Estern oder Ethern. Wenn Ester oder Ether verwendet werden, können die erhaltenen Polymere hydrolysiert werden, um die Ester- oder Ethergruppen in freie phenolische Hydroxylgruppen umzuwandeln.

Bevorzugte phenolische Polymere sind solche der Formel II

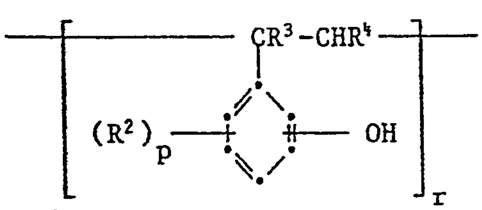 (II)

worin

$R^2$ ein Halogenatom, Hydroxyl, ein Alkyl, Alkoxy, Aryl, Aralkyl oder ein Hydroxyalkyl darstellt,

$R^3$ und $R^4$ gleich oder verschieden sind und je ein Wasserstoffatom, ein gerades oder verzweigtes Alkyl mit 1 bis 4 C-Atomen bedeuten,

p für Null oder eine Zahl von 1 bis 4 steht, und

r eine solche Zahl bedeutet, daß das durchschnittliche Molekulargewicht des Polymers im Bereich von 1500–10000 liegt.

Phenolische Polymere der Formel II, worin r eine solche Zahl darstellt, daß das mittlere Molekulargewicht über 10000 liegt, vorzugsweise von 10001 bis 30000, sind ebenfalls für die erfindungsgemäßen Mischungen geeignet.

Bevorzugte Polymere der Formel II sind solche, worin $R^2$ ein Halogenatom, $R^3$ und $R^4$ je Wasserstoff und p Null oder die Zahl 1 bedeuten. Die angegebene Hydroxylgruppe befindet sich vorzugsweise in p-Stellung zur $-CR^3-CHR^4$-Gruppierung. Solche phenolischen Polymere sind im Handel erhältlich.

Andere bevorzugte phenolische Polymere sind Copolymere, welche Einheiten der Formel III

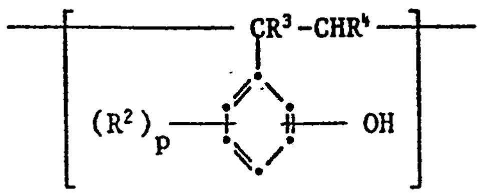 (III)

enthalten, worin $R^2$, $R^3$, $R^4$ und p die gleiche Bedeutung wie in Formel II haben, und Einheiten enthalten, die sich von Alkyl- oder Hydroxyalkylacrylaten oder -methacrylaten ableiten. Die Copolymeren haben im allgemeinen ein durchschnittliches Molekulargewicht von 1500 bis 30000. Beispiele solcher Copolymere sind solche, die Einheiten der Formel III enthalten, worin $R^2$ ein Halogenatom, $R^3$ und $R^4$ je Wasserstoff, p Null oder die Zahl 1 bedeuten, und Einheiten, die sich von Methylmethacrylat oder Hydroxyethylmethacrylat ableiten, enthalten.

Die Stickstoffbasen, die zur Herstellung der festen Lösungen (c) verwendet werden, können primäre, sekundäre oder tertiäre Amine oder basische, Stickstoff enthaltende Heterocyclen, wie Imidazole, sein. Geeignete Basen sind beispielsweise tertiäre Monoamine, sekundäre Monoamine, primäre, sekundäre oder tertiäre Diamine, tertiäre Triamine, gemischte Polyamine und N-Heterocyclen. Beispiele von geeigneten Basen mit einem Siedepunkt über 130 °C unter Normaldruck sind tertiäre Monoamine, wie 2-(N,N-Dimethylamino)-ethanol, sekundäre Monoamine, wie Di-isobutylamin, primäre Diamine, wie 1,3-Diaminopropan und 1,3-Diaminobutan, sekundäre Diamine, wie Piperazin, gemischte Polyamine, wie 3-(Dimethylamino)-propylamin, und N-Heterocyclen, wie 3-Methylpyridin oder 4-Methylpyridin.

Bevorzugte Basen sind solche, die einen Siedepunkt von über 150 °C unter Normaldruck aufweisen. Beispiele von solch bevorzugten Basen sind tertiäre Monoamine, wie Tri-n-butylamin, Tri-isobutylamin, Octyldimethylamin, Benzyldimethylamin, Tri-n-propylamin, Trihexylamin, N,N-Diethylcyclohexylamin, 2-(Diethylamino)-ethanol, 3-(Dimethylamino)-1-propanol und 2-(Dimethylaminomethyl)-phenol; sekundäre Monoamine, wie 2-(Methylamino)-ethanol, Di-n-amylamin und Diisoamylamin; primäre Diamine, wie Isophorondiamin (3-Aminoethyl-3,5,5-trimethylcyclohexlamin), 1,4-Diaminobutan, 1,5-Diaminopentan und Hexamethylendiamin; sekundäre Diamine, wie

N,N'-Diethylethylendiamin; tertiäre Diamine, wie N,N,N',N'-Tetramethylbutandiamin, 1,7-Bis-(dimethylamino)-heptan und Bis-(4-dimethylaminophenyl)-methan; tertiäre Triamine, wie 2,4,6-Tris-(dimethylaminomethyl)phenol; gemischte Polyamine, wie Triethylentetramin, Tetraethylenpentamin, Diethylentriamin, 3-(Diethylamino)-propylamin und N-(2-Aminoethyl)piperazin; und N-Heterocyclen, wie 1-Methylimidazol, 2-Methylimidazol, Benzimidazol, 2-Phenylimidazol und Chinolin.

Besonders bevorzugte Basen sind Benzyldimethylamin, 2,4,6-Tris-(dimethylaminomethyl)-phenol, Octyldimethylamin, Triethylentetramin, Isophorondiamin, 2-(Methylamino)-ethanol, 2-Methylimidazol, Benzimidazol, 2-Phenylimidazol, 1-Methylimidazol, 3-(Dimethylamino)-1-propanol und N-(2-Aminoethyl)-piperazine.

Besonders bevorzugte feste Lösungen (c) sind solche aus den besonders bevorzugten Basen und Poly-(p-vinylphenols) mit einem Molekulargewicht von 3000 bis 10000.

Die festen Lösungen (c) können hergestellt werden, indem man das phenolische Polymer zusammen mit der Stickstoffbase erhitzt, entweder in Abwesenheit eines Lösungsmittels oder in einem niederen Alkohol, besonders Methanol, bis eine klare Lösung entstanden ist und dann das Lösungsmittel entfernt. Gewöhnlich ist keine weitere Reinigung erforderlich. Das Gewichtsverhältnis von Polymer zur Stickstoffbase ist so zu wählen, daß ein festes, stabiles Produkt erhalten wird und beträgt im allgemeinen 0,8–4,0:1, insbesondere 1,0–3,0:1. Da keine stöchiometrischen Verhältnisse vorliegen, wird ein Gemisch von Produkten erhalten.

Die Menge des verwendeten latenten Härtungsmittels (b) in den erfindungsgemäßen Gemischen ist nicht kritisch und wird in üblicher Weise angewendet. Epoxidharzformulierungen mit latenten Härtungsmitteln sind bekannt. Im allgemeinen beträgt die Menge des latenten Härtungsmittels 1 bis 30 Gewichtsteile, insbesondere 5 bis 10 Gewichtsteile, pro 100 Gewichtsteile Epoxidharz (a).

Die Menge des verwendeten Härtungsbeschleunigers (c) ist in den erfindungsgemäßen Gemischen ebenfalls nicht kritisch, vorausgesetzt, daß eine ausreichende Menge vorliegt, um den Beschleunigungseffekt zu erhalten. Im allgemeinen beträgt die Menge 0,1 bis 10 Gew.-% Härtungsbeschleuniger, vorzugsweise 0,5 bis 5 Gew.-%, bezogen auf die Menge Epoxidharz (a).

Die erfindungsgemäßen Gemische können als Beschichtungsmaßen, Kitte und Dichtungsmaßen, Laminierharze und insbesondere als Klebstoffe eingesetzt werden. Die vorliegende Erfindung betrifft auch die Verwendung der erfindungsgemäßen Gemische bzw. ein Verfahren zum Verkleben zweier Oberflächen, insbesondere aus Metall, indem man eine erfindungsgemäße Mischung auf eine oder beide Oberflächen aufbringt, die beiden Oberflächen so aneinanderfügt, daß die erfindungsgemäße Mischung dazwischen liegt und das ganze solange erhitzt, bis das Gemisch sich verfestigt hat. Zur Verfestigung ist eine Temperatur im Bereich von 150–220 °C, vorzugsweise von 175–200 °C, geeignet, um eine Verfestigung innerhalb von 5 sek bis 10 min, vorzugsweise 10 sek bis 5 min, zu erreichen. Das Verfahren kann zum Verkleben von Metallflächen, wie Stahl oder Aluminium, plastischem Material, Glas oder Keramikmaterial, insbesondere von Metallen, verwendet werden.

Die erfindungsgemäßen Gemische können zur Verbesserung ihrer physikalischen oder chemischen Eigenschaften geeignete Zusatzmittel enthalten, zum Beispiel Pigmente, Farbstoff, Flexibilisatoren, Weichmacher, Füllstoffe, Thixotropiermittel und flammhemmende Stoffe.

In den folgenden Beispielen wird die Erfindung näher beschrieben. Teile bedeuten Gewichtsteile. Die in den Beispielen verwendeten Beschleuniger werden wie folgt hergestellt:

Beschleuniger I

36,0 g Poly(p-vinylphenol) mit einem durchschnittlichen Molekulargewicht von 5000 und erhältlich von Maruzen Oil Co. Ltd., Tokyo, Japan, unter der Bezeichnung «Resin M Grade S-2» und 30 ml Methanol werden gerührt und auf etwa 50 °C erwärmt, bis eine klare Lösung erhalten wird. Zur Lösung werden tropfenweise 20 g Benzyldimethylamin zugegeben und die Mischung wird danach 0,5 h bei etwa 50 °C gerührt.

Das Methanol wird mittels Destillation bei Normaldruck entfernt, wobei am Schluß die Temperatur 140 °C beträgt. Dann wird der Druck auf 533,2 mbar vermindert, wobei während 0,5 h die Temperatur auf 140 °C gehalten wird. Die heisse Mischung wird in Aluminiumbehälter gegossen, wobei sie zu einer bröckeligen Festsubstanz abkühlt, die zu einem feinen Pulver vermahlen wird.

Beschleuniger II

36,0 g «Resin M Grade S-2» werden bei Raumtemperatur in 75 ml Methanol gelöst und unter Rühren werden tropfenweise 36,0 g 2,4,6-Tris-(dimethylamino)-phenol zugegeben. Die Mischung wird bei Raumtemperatur während 0,5 h weitergerührt, und dann wird das Methanol bei Normaldruck destillativ entfernt, wobei am Ende ein verminderter Druck von 533,2 mbar und eine Temperatur von 150–160 °C angewendet werden. Die heisse Mischung wird in Aluminiumbehälter gegossen, wobei sie sich zu einer bröckligen Masse verfestigt, die zu einem feinen Pulver vermahlen wird.

Beschleuniger III

10,0 g «Resin M Grade S-2» und 7,0 g Octyldimethylamin werden bei Raumtemperatur gerührt, wobei eine Aufschlämmung erhalten wird. Diese wird langsam unter Rühren auf 160 °C erhitzt und während 5 min bei dieser Temperatur belassen, wobei eine klare, bewegliche Flüssigkeit erhalten wird. Diese wird zwecks Abkühlung in Aluminiumbehälter gegossen. Die erhaltene braune, bröcklige feste Masse wird zu einem Pulver vermahlen.

Beschleuniger IV

Das Verfahren zur Herstellung von Beschleuniger III wird wiederholt, wobei das Amin durch 5,0 g Triäthylentetramin ersetzt wird. Man erhält eine braune, bröcklige Festsubstanz, die zu einem Pulver vermahlen wird.

Beschleuniger V

Das Verfahren zur Herstellung von Beschleuniger III wird wiederholt, wobei das Amin durch 10 g Isophorondiamin ersetzt wird und eine Höchsttemperatur von 140 °C angewendet wird. Der erhaltene Beschleuniger stellt eine braune, bröcklige Festsubstanz dar, die zu einem Pulver vermahlen wird.

Beschleuniger VI

Das Verfahren zur Herstellung von Beschleuniger III wird wiederholt, wobei das Amin durch 5 g 2-Methylaminoethanol ersetzt wird und eine maximale Temperatur von 150 °C angewendet wird. Der erhaltene Beschleuniger stellt eine braune, bröcklige Masse dar, die zu einem Pulver vermahlen wird.

Beschleuniger VII

Das Verfahren zur Herstellung von Beschleuniger III wird wiederholt, wobei das Amin durch 5,5 g 2-Methylimidazol ersetzt wird und eine maximale Temperatur von 150 °C angewendet wird. Der erhaltene Bschleuniger stellt eine braune, bröcklige Masse dar, die zu einem Pulver vermahlen wird.

Beschleuniger VIII

100,0 g «Resin M Grade S-2» werden bei 40–45 °C in 150 ml Methanol gelöst. Unter Rühren gibt man 100 g Benzimidazol zu. Diese Mischung wird weitere 15 min bei dieser Temperatur gerührt. Unter Normaldruck wird das Methanol destillativ entfernt, wobei im Reaktionsgefäss die Temperatur auf 160 °C ansteigt. Die letzten Spuren von Methanol werden bei einem Druck von 533,2 mbar und bei 160 °C entfernt. Die Mischung wird während 1,5 h auf 160 °C gehalten und dann in Aluminiumbehälter gegossen, wo sie sich zu einer bröckligen Substanz verfestigt, die zu einem feinen Pulver vermahlen wird.

Beschleuniger IX

10,0 g «Resin M Grade S-2» werden in 20 ml Methanol bei Raumtemperatur gelöst und unter Rühren gibt man 10,0 g 2-Phenylimidazol hinzu. Die Mischung wird bei Raumtemperatur noch weitere 15 min gerührt, anschliessend 15 min bei 50–55 °C. Das Methanol wird unter einem Druck von 26,6 mbar bei 60 °C destillativ entfernt, wobei eine bröcklige Festsubstanz erhalten wird, die zu einem feinen Pulver vermahlen wird.

Beschleuniger X

100,0 g «Resin M Grade S-2» werden bei 45–50 °C in 100 ml Methanol gelöst. Unter Rühren gibt man zu dieser Lösung tropfenweise 55,56 g 1-Methylimidazol. Die Mischung wird für eine weitere Stunde bei 45–50 °C gerührt. Dann wird das Methanol unter Normaldruck destillativ entfernt, wobei im Reaktionsgefäss die Temperatur auf 140 °C ansteigt. Die letzten Spuren an Methanol werden bei einem Druck von 533,2 mbar und 140 °C entfernt. Die Mischung wird dann für weitere 1,5 h auf 140 °C erhitzt und anschliessend zum Abkühlen in Aluminiumgefässe gegossen, wobei sie sich zu einer braunen, bröckligen Masse verfestigt. Diese wird zu einem feinen Pulver vermahlen.

Beschleuniger XI

2,0 g «Resin M Grade S-2» und 1,0 g 3-(Dimethylamino)-1-propanol werden bei Raumtemperatur gemischt, wobei eine dicke Aufschlämmung erhalten wird, die unter Rühren solange auf 140 °C erhitzt wird, bis das «Resin M» sich im Amin zu einer klaren Schmelze löst. Diese wird dann noch 15 min auf 140 °C erhitzt und anschliessend in Aluminiumbehälter gegossen, wo sie sich zu einer braunen, bröckligen Masse verfestigt, die zu einem feinen Pulver vermahlen wird.

Beschleuniger XII

Das Verfahren zur Herstellung von Beschleuniger XI wird wiederholt, wobei das dort verwendete Amin durch 1,5 g 2-(Dimethylaminomethyl)phenol ersetzt wird. Die erhaltene braune, bröcklige Festsubstanz wird dann zu einem feinen Pulver vermahlen.

Beschleuniger XIII

600,0 g «Resin M Grade S-2» werden in 1050 ml Methanol bei 35 °C gelöst und man gibt zur Lösung 660,0 g 2,4,6-Tris-(dimethylaminomethyl)-phenol tropfenweise unter Rühren hinzu. Die Mischung wird danach für 30 min bei 35 °C gerührt und anschliessend wird das Methanol unter Normaldruck bei 130–135 °C destillativ entfernt. Die letzten Spuren an Methanol werden durch 30-minütiges Erhitzen auf 130–135 °C unter 533,2 mbar aus dem Gemisch beseitigt. Die heisse Mischung wird dann in Aluminiumgefässe gegossen, wobei eine bröcklige feste Masse erhalten wird, die zu einem feinen Pulver vermahlen wird.

Beschleuniger XIV

Das Verfahren zur Herstellung von Beschleuniger XI wird wiederholt, wobei anstelle des verwendeten Amins nun 1,0 g 3-(Dimethylamino)-propylamin verwendet wird. Eine braune, bröcklige feste Masse wird erhalten, die zu einem feinen Pulver vermahlen wird.

Beschleuniger XV

Das Verfahren zur Herstellung von Beschleuniger XI wird wiederholt, wobei als Amin nun N-(2-Aminoethyl)-piperazin eingesetzt wird. Es wird eine bröcklige, braune feste Masse erhalten, die zu einem feinen Pulver vermahlen wird.

Beschleuniger XVI

Eine Mischung aus 50,0 g eines Poly-(p-vinylphenols) mit einem durchschnittlichen Molekulargewicht von 10000, erhältlich von der Firma Maruzen Oil, Ltd., Tokyo, Japan unter der Bezeichnung «Resin M Grade S-3» und 30,0 g Benzyldimethylamin wird langsam auf 180 °C erhitzt und 10 min bei dieser Temperatur belassen, wobei eine klare, mobile Flüssigkeit erhalten wird. Diese wird in Aluminiumbehälter gegossen, und die erhaltene braune, bröcklige Festsubstanz wird zu einem Pulver vermahlen.

Beschleuniger XVII

12,0 g «Resin M Grade S-2» werden bei Raumtemperatur in 25 ml Methanol gelöst und zu dieser Lösung gibt man unter Rühren tropfenweise 12,0 g 2,4,6-Tris-(dimethylaminomethyl)-phenol. Danach wird die Mischung 30 min bei Raumtemperatur und 30 min bei 70 °C gerührt. Nach dem Entfernen des Methanols unter vermindertem Druck bei 70 °C erhält man eine spröde Festsubstanz, die zu einem Pulver vermahlen wird.

Beispiel 1

100 Teile Bisphenol A-diglycidylether mit einem Epoxidgehalt von 5,2 Äquivalenten/kg werden mit 7,5 Teilen Dicyandiamid, 5,0 Teilen hochdispersem Siliciumdioxid und 2,8 Teilen Beschleuniger I gemischt. Die Mischung ist bei 23 °C über ein Jahr und bei 40 °C über 4,5 Monate lagerstabil. Eine Probe dieser Mischung wird auf eine auf 180 °C erhitzte Heizplatte aufgebracht, wobei diese innerhalb von 2,8 min sich verfestigte. Wenn eine 2 mm dicke Schicht aus dieser Mischung, welche noch 60 Teile Talk enthält, schnell auf 200 °C erhitzt wird, sind keine Anzeichen einer Blasenbildung zu erkennen.

Beispiel 2

Beispiel 1 wird unter Verwendung von 5,6 Teilen Beschleuniger I wiederholt. Auf der Heizplatte verfestigt sich diese Mischung innerhalb von 1,3 min. Bei 40 °C beträgt die Lagerstabilität der Mischung mehr als 4,5 Monate.

Beispiel 3

Beispiel 1 wird unter Verwendung von 1,5 Teilen Beschleuniger II anstelle des Beschleunigers I wiederholt. Bei 180 °C verfestigt sich die Mischung innerhalb von 2,2 min und bei 40 °C beträgt die Lagerstabilität der Mischung 7 bis 8 Monate. Wenn eine 2 mm dicke Schicht aus dieser Mischung, die zusätzlich 60 Teile Talk enthält, schnell auf 200 °C erhitzt, sind keine Anzeichen einer Blasenbildung zu erkennen.

Beispiel 4

Beispiel 1 wird unter Verwendung von 4,9 Teilen Beschleuniger III wiederholt. Bei 180 °C verfestigt sich die Mischung innerhalb von einer Minute, und bei 40 °C beträgt die Lagerstabilität dieser Mischung 6 bis 7 Monate. Wenn eine 2 mm dicke Schicht aus dieser Mischung, welche noch 60 Teile Talk enthält, schnell auf 200 °C erhitzt wird, sind keine Anzeichen einer Blasenbildung zu erkennen.

Beispiel 5

Beispiel 1 wird unter Verwendung von 6,0 Teilen Beschleuniger IV wiederholt. Bei 180 °C verfestigt sich die Mischung innerhalb von 1,6 min, und bei 40 °C ist die Mischung 3 bis 4 Monate lagerstabil. Wenn eine 2 mm dicke Schicht aus dieser Mischung, welche noch zusätzlich 60 Teile Talk enthält, schnell auf 200 °C erhitzt wird, sind keine Anzeichen einer Blasenbildung erkennbar.

Beispiel 6

Beispiel 1 wird unter Verwendung von 4,0 Teilen Beschleuniger V wiederholt. Bei 180 °C verfestigt sich die Mischung innerhalb von 5,2 min, und bei 40 °C ist die Mischung 3 bis 4 Monate lagerstabil. Wenn eine 2 mm dicke Schicht aus dieser Mischung, die noch 60 Teile Talk enthält, schnell auf 200 °C erhitzt wird, sind keine Anzeichen von Blasenbildung erkennbar.

Beispiel 7

Beispiel 1 wird unter Verwendung von 6,0 Teilen Beschleuniger VI wiederholt. Die erhaltene Mischung verfestigt sich bei 180 °C innerhalb von 1 min, und bei 40 °C ist die Mischung 6 bis 7 Tage lagerstabil. Wenn eine 2 mm dicke Schicht aus dieser Mischung, die noch 60 Teile Talk enthält, schnell auf 200 °C erhitzt wird, sind keine Anzeichen einer Blasenbildung erkennbar.

Beispiel 8

Beispiel 1 wird unter Verwendung von 5,6 Teilen Beschleuniger VII wiederholt. Bei 180 °C verfestigt sich die Mischung innerhalb von 0,3 min, und bei 40 °C weist die Mischung eine Lagerstabilität von 4 Wochen auf. Wenn eine 2 mm dicke Schicht aus dieser Mischung, die noch 60 Teile Talk enthält, schnell auf 200 °C erhitzt wird, sind keine Anzeichen einer Blasenbildung erkennbar.

Beispiel 9

100 Teile des in Beispiel 1 verwendeten Epoxidharzes werden mit 25,2 Teilen Isophthalsäuredihydrazid, 5,0 Teilen hochdispersem Siliciumdioxid und 2,0 Teilen Beschleuniger VIII gemischt. Eine Probe dieser Mischung verfestigt sich auf einer auf 180 °C erhitzten Heizplatte nach 1 min. Bei 40 °C hat die Mischung eine Lagerfähigkeit von 13 bis 14 Tagen. Wenn eine 2 mm dicke Schicht aus der Mischung, die noch 60 Teile Talk enthält, schnell auf 200 °C erhitzt wird, erkennt man keine Anzeichen einer Blasenbildung.

Beispiel 10

Beispiel 9 wird wiederholt, indem man jetzt 2,0 Teile des Beschleunigers IX einsetzt. Bei 180 °C verfestigt sich diese Mischung innerhalb von 0,7 min, und bei 40 °C hat die Mischung eine Lagerfähigkeit von 6 bis 7 Tagen. Wenn eine 2 mm dicke Schicht aus dieser Mischung, die noch 60 Teile Talk enthält, schnell auf 200 °C erhitzt wird, sind keine Anzeichen einer Blasenbildung erkennbar.

Beispiel 11

Beispiel 9 wird wiederholt, indem man nun den Beschleuniger XVI in gleichen Mengen einsetzt. Bei 180 °C verfestigt sich diese Mischung innerhalb von 1,7 min, und bei 40 °C ist die Mischung lagerstabil während mehr als 5 Wochen. Wenn eine 2 mm dicke Schicht aus dieser Mischung, die noch zusätzlich 60 Teile Talk enthält, schnell auf 200 °C erhitzt wird, sind keine Anzeichen einer Blasenbildung erkennbar.

Beispiel 12

100 Teile des im Beispiel 1 verwendeten Epoxidharzes werden mit 23,1 Teilen Adipinsäuredihydrazid, 5 Teilen hochdispersem Siliciumdioxid und 2,8 Teilen Beschleuniger I gemischt. Eine Probe dieser Mischung verfestigt sich auf einer auf 180 °C erhitzten Heizplatte innerhalb einer Minute. Bei 40 °C weist die Mischung eine Lagerfähigkeit von 5 Wochen auf. Wenn eine 2 mm dicke Schicht dieser Mischung, die noch 60 Teile Talk enthält, schnell auf 200 °C erhitzt wird, sind keine Anzeichen einer Blasenbildung erkennbar.

Beispiel 13

Beispiel 12 wird wiederholt, indem nun 4,0 Teile des Beschleunigers III eingesetzt werden. Bei 180 °C verfestigt sich die Mischung innerhalb von 0,9 min, und bei 40 °C ist die Mischung mehr als 5 Wochen lagerstabil. Wenn eine 2 mm dicke Schicht aus dieser Mischung, die noch zusätzlich 60 Teile Talk enthält, schnell auf 200 °C erhitzt wird, sind Anzeichen einer Blasenbildung nicht erkennbar.

Beispiel 14

Eine Mischung wird hergestellt aus:

| | |
|---|---|
| Epoxidharz | 100 Teile |
| Dicyandiamid | 7,5 Teile |
| hochdispersem Siliciumdioxid | 5,0 Teile |
| Mikroglaskugeln | 1,0 Teile |
| Beschleuniger I | 5,6 Teile |

Das verwendete Epoxidharz entspricht dem von Beispiel 1. Die Mikroglaskugeln werden zwecks Kontrolle der Leimschichtdicke zugegeben.

Die Mischung wird auf entfettete, sandgestrahlte Stahlbleche aufgetragen und überlappte Verklebungen mit einem überlappenden Anteil von 645 $mm^2$ werden hergestellt. Die Härtung wird bei 200 °C während 5 min durchgeführt, dann wird die Verklebung auf Raumtemperatur abgekühlt. Die Scherfestigkeit der Verklebung beträgt 16,7 MPa.

Beispiel 15

10 g einer Mischung aus gleichen Teilen N,N,N',N'-Tetraglycidyl-bis-(4-aminophenyl)-methan mit einem Epoxidgehalt von 7,8–8,2 Äquivalenten/kg und N,N,O-Triglycidyl-p-aminophenol mit einem Epoxidgehalt von 9,55 Äquivalenten/kg werden mit 2,75 feinstgemahlenem 4,4-Diaminophenylsulfon und 0,13 g Beschleuniger XVII gemischt. Bei 60 °C ist die erhaltene Mischung während 6 Tagen lagerstabil. Eine Probe verfestigt sich auf einer auf 170 °C erhitzten Heizplatte innerhalb 18 min.

**Patentansprüche für die Vertragsstaaten: CH, DE, FR, GB, IT, LI, NL, SE**

1. Härtbare Gemische, enthaltend

(a) ein Epoxidharz,

(b) ein Stickstoff enthaltendes latentes Härtungsmittel für Epoxidharze und

(c) als Härtungsbeschleuniger eine feste Lösung aus einer Stickstoffbase mit einem Siedepunkt oberhalb von 130 °C und einem phenolischen Polymer, das ein Additionspolymer aus einem einen ungesättigten Substituenten aufweisenden Phenol ist, wobei die feste Lösung als Pulver in der Mischung aus (a) und (b) dispergiert vorliegt.

2. Gemische gemäß Anspruch 1, worin das Epoxidharz (a) flüssig ist und ein Polyglycidylether, Polyglycidylester, N,N'-Diglycidylhydantoin oder ein Poly(N-glycidyl)-derivat eines aromatischen Amins ist.

3. Gemische gemäß Anspruch 1 oder 2, worin das Härtungsmittel (b) ein Bortrichlorid/Amin- oder ein Bortrifluorid/Amin-Komplex, Dicyandiamid, Melamin, Diallylmelamin, ein Guanamin, ein Aminotriazol, ein Hydrazid, Semicarbazid, Cyanacetamid oder ein aromatisches Polyamin ist.

4. Gemische gemäß Anspruch 3, worin das Härtungsmittel (b) Isophthalsäuredihydrazid, Adipinsäuredihydrazid oder 4,4'-Diaminodiphenylsulfon ist.

5. Gemische gemäß einem der vorhergehenden Ansprüche, worin das phenolische Polymer der Formel II

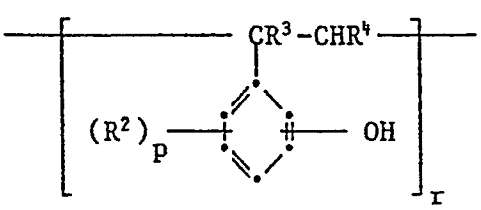

(II)

entspricht, worin

$R^2$ ein Halogenatom, Hydroxyl, ein Alkyl, Alkoxy, Aryl, Aralkyl oder ein Hydroxyaralkyl darstellt,

$R^3$ und $R^4$ gleich oder verschieden sind und je ein Wasserstoffatom, ein gerades oder verzweigtes Alkyl mit 1 bis 4 C-Atomen bedeuten,

p für Null oder eine Zahl von 1 bis 4 steht, und

r eine solche Zahl bedeutet, daß das durchschnittliche Molekulargewicht des Polymers im Bereich von 1500–10000 liegt.

6. Gemische gemäß Anspruch 5, worin

$R^2$ ein Halogenatom darstellt,

$R^3$ und $R^4$ je ein Wasserstoffatom bedeuten und

p für Null oder die Zahl 1 steht.

7. Gemische nach einem der vorhergehenden Ansprüche, worin die Stickstoffbase in der festen Lösung (c) ein tertiäres Monoamin, sekundäres Monoamin, primäres Diamin, sekundäres Diamin, tertiäres Diamin, tertiäres Triamin, gemischtes Polyamin oder ein N-Heterocyclus ist.

8. Gemische gemäß Anspruch 7, worin die Stickstoffbase einen Siedepunkt oberhalb von 150 °C aufweist.

9. Gemische gemäß Anspruch 8, worin die Stickstoffbase Benzyldimethylamin, 2,4,6-Tris-(dimethylaminomethyl)-phenol, Octyldimethylamin, Triethylentetramin, Isophorondiamin, 2-(Methylamino)-ethanol, 2-Methylimidazol, Benzimidazol, 2-Phenylimidazol, 1-Methylimidazol, 3-(Dimethylamino)-1-propanol oder N-(2-Aminoethyl)piperazin ist.

10. Gemische gemäß einem der hervorgehenden Ansprüche, worin das Gewichtsverhältnis von phenolischem Polymer zur Stickstoffbase in der festen Lösung (c) im Bereich von 0,8–4,0:1 ist.

11. Ein Härtungsbeschleuniger, welcher eine feste Lösung aus einer Stickstoffbase mit einem Siedepunkt oberhalb 130 °C und einem Additionspolymer eines Phenols mit einem ungesättigten Substituenten ist.

12. Verwendung der härtbaren Gemische gemäß Anspruch 1 zum Verkleben von Oberflächen.

**Patentansprüche für den Vertragsstaat: AT**

1. Härtbare Gemische, enthaltend
(a) ein Epoxidharz,
(b) ein Stickstoff enthaltendes latentes Härtungsmittel für Epoxidharze und
(c) als Härtungsbeschleuniger eine feste Lösung aus einer Stickstoffbase mit einem Siedepunkt oberhalb von 130 °C und einem phenolischen Polymer, das ein Additionspolymer aus einem einen ungesättigten Substituenten aufweisenden Phenol ist, wobei die feste Lösung als Pulver in der Mischung aus (a) und (b) dispergiert vorliegt.

2. Gemische gemäß Anspruch 1, worin das Epoxidharz (a) flüssig ist und ein Polyglycidylether, Polyglycidylester, N,N'-Diglycidylhydantoin oder ein Poly(N-glycidyl)-derivat eines aromatischen Amins ist.

3. Gemische gemäß Anspruch 1 oder 2, worin das Härtungsmittel (b) ein Bortrichlorid/Amin- oder ein Bortrifluorid/Amin-Komplex Dicyandiamid, Melamin, Diallylmelamin, ein Guanamin, ein Aminotriazol, ein Hydrazid, Semicarbazid, Cyanacetamid oder ein aromatisches Polyamin ist.

4. Gemische gemäß Anspruch 3, worin das Härtungsmittel (b) Isophthalsäuredihydrazid, Adipinsäuredihydrazid oder 4,4'-Diaminodiphenylsulfon ist.

5. Gemische gemäß einem der vorhergehenden Ansprüche, worin das phenolische Polymer der Formel II

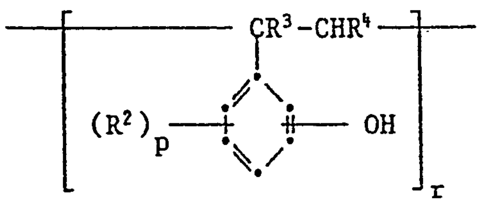

(II)

entspricht, worin
$R^2$ ein Halogenatom, Hydroxyl, ein Alkyl, Alkoxy, Aryl, Aralkyl oder ein Hydroxyaralkyl darstellt,
$R^3$ und $R^4$ gleich oder verschieden sind und je ein Wasserstoffatom, ein gerades oder verzweigtes Alkyl mit 1 bis 4 C-Atomen bedeuten,
p für Null oder eine Zahl von 1 bis 4 steht, und
r eine solche Zahl bedeutet, daß das durchschnittliche Molekulargewicht des Polymers im Bereich von 1500–10000 liegt.

6. Gemische gemäß Anspruch 5, worin
$R^2$ ein Halogenatom darstellt,
$R^3$ und $R^4$ je ein Wasserstoffatom bedeuten und
p für Null oder die Zahl 1 steht.

7. Gemische nach einem der vorhergehenden Ansprüche, worin die Stickstoffbase in der festen Lösung (c) ein tertiäres Monoamin, sekundäres Monoamin, primäres Diamin, sekundäres Diamin, tertiäres Diamin, tertiäres Triamin, gemischtes Polyamin oder ein N-Heterocyclus ist.

8. Gemische gemäß Anspruch 7, worin die Stickstoffbase einen Siedepunkt oberhalb von 150 °C aufweist.

9. Gemische gemäß Anspruch 8, worin die Stickstoffbase Benzyldimethylamin, 2,4,6-Tris-(dimethylaminomethyl)-phenol, Octyldimethylamin, Triethylentetramin, Isophorondiamin, 2-(Methylamino)-ethanol, 2-Methylimidazol, Benzimidazol, 2-Phenylimidazol, 1-Methylimidazol, 3-(Dimethylamino)-1-propanol oder N-(2-Aminoethyl)piperazin ist.

10. Gemische gemäß einem der hervorgehenden Ansprüche, worin das Gewichtsverhältnis von phenolischem Polymer zur Stickstoffbase in der festen Lösung (c) im Bereich von 0,8–4,0:1 ist.

11. Verfahren zum Verkleben zweier Oberflächen, indem man ein Gemisch gemäß Anspruch 1 bis 10 auf eine oder beide Oberflächen aufbringt, die beiden Oberflächen so aneinanderfügt, daß das Gemisch gemäß Anspruch 1 bis 10 dazwischen liegt, und das ganze solange erhitzt, bis sich das Gemisch verfestigt hat.

**Claims for the Contracting States: CH, DE, FR, GB, IT, LI, NL, SE**

1. A curable composition containing
(a) an epoxy resin,
(b) a nitrogen-containing latent curing agent for epoxy resins and
(c) as curing accelerator a solid solution of a nitrogen base having a boiling point above 130 °C and a phenolic polymer which is an addition polymer of a phenol having an unsaturated substituent, the solid solution being present as a powder dispersed in the mixture of (a) and (b).

2. A composition according to claim 1, wherein the epoxy resin (a) is liquid and is a polyglycidyl ether, polyglycidyl ester, N,N'-diglycidylhydantoin or a poly(N-glycidyl) derivative of an aromatic amine.

3. A composition according to claim 1 or 2, wherein the curing agent (b) is a boron trichloride/amine complex or a boron trifluoride/amine complex, dicyandiamide, melamine, diallylmelamine, a guanamine, an aminotriazole, a hydrazide, semicarbazide, cyanoacetamide or an aromatic polyamine.

4. A composition according to claim 3, wherein the curing agent (b) is isophthalic acid dihydrazide, adipic acid dihydrazide or 4,4'-diaminodiphenyl sulfone.

5. A composition according to any one of the preceding claims, wherein the phenolic polymer has the formula II

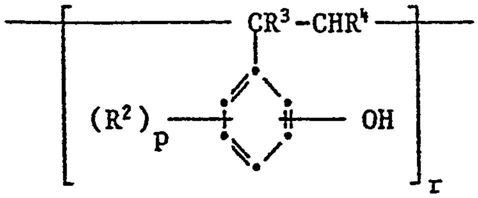

(II)

wherein

$R^2$ is a halogen atom, hydroxyl, an alkyl, alkoxy, aryl, aralkyl or a hydroxyaralkyl,

$R^3$ and $R^4$ are identical or different and are each a hydrogen atom, a straight-chain or branched alkyl having 1 to 4 carbon atoms,

p is zero or a number from 1 to 4 and

r is a number such that the average molecular weight of the polymer is within the range 1500–10000.

6. A composition according to claim 5, wherein

$R^2$ is a halogen atom,

$R^3$ and $R^4$ are each a hydrogen atom and

p is zero or the number 1.

7. A composition according to any one of the preceding claims, wherein the nitrogen base in the solid solution (c) is a tertiary monoamine, secondary monoamine, primary diamine, secondary diamine, tertiary diamine, tertiary triamine, mixed polyamine or an N-heterocycle.

8. A composition according to claim 7, wherein the nitrogen base has a boiling point above 150 °C.

9. A composition according to claim 8, wherein the nitrogen base is benzyldimethylamine, 2,4,6-tris(dimethylaminomethyl)phenol, octyldimethylamine, triethylenetetramine, isophorone diamine, 2-(methylamino)ethanol, 2-methylimidazole, benzimidazole, 2-phenylimidazole, 1-methylimidazole, 3-(dimethylamino)-1-propanol or N-(2-aminoethyl)piperazine.

10. A composition according to any one of the preceding claims, wherein the weight ratio of phenolic polymer to nitrogen base in the solid solution (c) is within the range 0.8–4.0:1.

11. A curing accelerator which is a solid solution of a nitrogen base having a boiling point above 130 °C and an addition polymer of a phenol having an unsaturated substituent.

12. Use of the curable composition according to claim 1 for the bonding of surfaces.

**Claims for the Contracting State: AT**

1. A curable composition containing

(a) an epoxy resin,

(b) a nitrogen-containing latent curing agent for epoxy resins and

(c) as curing accelerator a solid solution of a nitrogen base having a boiling point above 130 °C and a phenolic polymer which is an addition polymer of a phenol having an unsaturated substituent, the solid solution being present as a powder dispersed in the mixture of (a) and (b).

2. A composition according to claim 1, wherein the epoxy resin (a) is liquid and is a polyglycidyl ether, polyglycidyl ester, N,N'-diglycidylhydantoin or a poly(N-glycidyl) derivative of an aromatic amine.

3. A composition according to claim 1 or 2, wherein the curing agent (b) is a boron trichloride/amine complex or a boron trifluoride/amine complex, dicyandiamide, melamine, diallylmelamine, a guanamine, an aminotriazole, a hydrazide, semicarbazide, cyanoacetamide or an aromatic polyamine.

4. A composition according to claim 3, wherein the curing agent (b) is isophthalic acid dihydrazide, adipic acid dihydrazide or 4,4'-diaminodiphenyl sulfone.

5. A composition according to any one of the preceding claims, wherein the phenolic polymer has the formula II

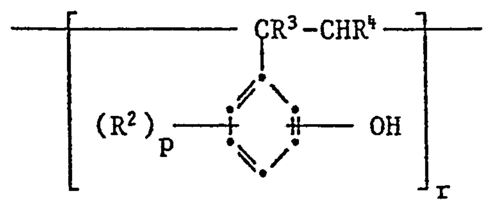

(II)

wherein

$R^2$ is a halogen atom, hydroxyl, an alkyl, alkoxy, aryl, aralkyl or a hydroxyaralkyl,

$R^3$ and $R^4$ are identical or different and are each a hydrogen atom, a straight-chain or branched alkyl having 1 to 4 carbon atoms,

p is zero or a number from 1 to 4 and

r is a number such that the average molecular weight of the polymer is within the range 1500–10000.

6. A composition according to claim 5, wherein

$R^2$ is a halogen atom,

$R^3$ and $R^4$ are each a hydrogen atom and

p is zero or the number 1.

7. A composition according to any one of the preceding claims, wherein the nitrogen base in the solid solution (c) is a tertiary monoamine, secondary monoamine, primary diamine, secondary diamine, tertiary diamine, tertiary triamine, mixed polyamine or an N-heterocycle.

8. A composition according to claim 7, wherein the nitrogen base has a boiling point above 150 °C.

9. A composition according to claim 8, wherein the nitrogen base is benzyldimethylamine, 2,4,6-tris(dimethylaminomethyl)phenol, octyldimethylamine, triethylenetetramine, isophorone diamine, 2-(methylamino)ethanol, 2-methylimidazole, benzimidazole, 2-phenylimidazole, 1-methylimidazole, 3-(dimethylamino)-1-propanol or N-(2-aminoethyl)piperazine.

10. A composition according to any one of the preceding claims, wherein the weight ratio of phenolic polymer to nitrogen base in the solid solution (c) is within the range 0.8–4.0:1.

11. A method for the bonding of two surfaces which comprises applying a composition according to claim 1 to 10 to one or both surfaces, placing the two surfaces together such that the

composition according to claim 1 to 10 is positioned therebetween, and heating the assembly until the composition solidifies.

**Revendications pour les Etats contractants: CH, DE, FR, GB, IT, LI, NL, SE**

1. Mélanges durcissables qui comprennent:
(a) une résine époxyde,
(b) un durcisseur latent azoté pour résines époxydes, et
(c) comme accélérateur de durcissement une solution solide d'une base azotée à point d'ébullition supérieur à 130 °C et d'un polymère phénolique qui est un polymère d'addition d'un phénol avec un substituant insaturé, solution solide qui est à l'état de poudre dispersée dans le mélange des constituants (a) et (b).

2. Mélanges selon la revendication 1 dans lesquels la résine époxyde (a) est liquide et est un éther ou un ester polyglycidylique, la N,N'-diglycidylhydantoïne ou un dérivé poly-(N-polyglycidylique) d'une amine aromatique.

3. Mélanges selon la revendication 1 ou 2 dans lesquels le durcisseur (b) est un complexe de trichlorure ou de trifluorure de bore avec une amine, le dicyanodiamide, la mélamine, la diallylmélamine, une guanamine, un aminotriazole, un hydrazide, un semicarbazide, le cyanoacétamide ou une polyamine aromatique.

4. Mélanges selon la revendication 3 dans lesquels le durcisseur (b) est le dihydrazide de l'acide isophthalique ou de l'acide adipique ou la 4,4'-diaminodiphénylsulfone.

5. Mélanges selon l'une des revendications précédentes dans lesquels le polymère phénolique répond à la formule II ci-dessous:

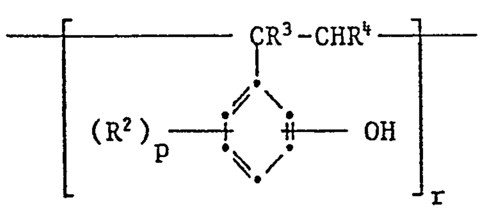

(II)

dans laquelle
$R^2$ désigne un atome d'halogène, un hydroxyle ou un groupe alkyle, alcoxy, aryle, aralkyle ou hydroxyaralkyle,
$R^3$ et $R^4$, qui peuvent identiques ou différents l'un de l'autre, sont chacun un atome d'hydrogène ou un alkyle à chaîne linéaire ou ramifiée en $C_1$ à $C_4$,
p est un nombre de 0 à 4, et
r un nombre qui donne une masse moléculaire moyenne du polymère de 1500 à 10000.

6. Mélanges selon la revendication 5 dans lesquels, dans la formule II,
$R^2$ est un atome d'halogène,
$R^3$ et $R^4$ sont chacun un atome d'hydrogène et
p est le nombre de 0 ou 1.

7. Mélanges selon l'une des revendications précédentes dans lesquels la base azotée de la solution solide (c) est une monoamine tertiaire ou secondaire, une diamine primaire ou secondaire, une diamine ou une triamine tertiaire, ou bien un mélange de polyamines ou un composé hétérocyclique azoté.

8. Mélanges selon la revendication 7 dans lesquels la base azotée a un point d'ébullition supérieur à 150 °C.

9. Mélanges selon la revendication 8 dans lesquels la base azotée est la benzyldiméthylamine, le 2,4,6-tris-(diméthylaminométhyl)-phénol, l'octyldiméthylamine, la triéthylène-tétramine, l'isophorone-diamine, le 2-(méthylamino)-éthanol, le 2-méthylimidazole, le benzimidazole, le 2-phénylimidazole, le 1-méthylimidazole, le 3-(diméthylamino)-1-propanol ou la N-(2-aminoéthyl)-pipérazine.

10. Mélanges selon l'une des revendications précédentes dans lesquels le rapport pondéral du polymère phénolique à la base azotée de la solution solide (c) est compris entre 0,8 et 4,0.

11. Un accélérateur de durcissement constitué d'une solution solide d'une base azotée ayant un point d'ébullition supérieur à 130 °C et d'un polymère d'addition d'un phénol ayant un substituant insaturé.

12. L'emploi des mélanges durcissables selon la revendication 1 pour coller des surfaces l'une à l'autre.

**Revendications pour l'Etat contractant: AT**

1. Mélanges durcissables qui comprennent:
(a) une résine époxyde,
(b) un durcisseur latent azoté pour résines époxydes, et
(c) comme accélérateur de durcissement une solution solide d'une base azotée à point d'ébullition supérieur à 130 °C et d'un polymère phénolique qui est un polymère d'addition d'un phénol avec un substituant insaturé, solution solide qui est à l'état de poudre dispersée dans le mélange des constituants (a) et (b).

2. Mélanges selon la revendication 1 dans lesquels la résine époxyde (a) est liquide et est un éther ou un ester polyglycidylique, la N,N'-diglycidylhydantoïne ou un dérivé poly-(N-polyglycidylique) d'une amine aromatique.

3. Mélanges selon la revendication 1 ou 2 dans lesquels le durcisseur (b) est un complexe de trichlorure ou de trifluorure de bore avec une amine, le dicyanodiamide, la mélamine, la diallylmélamine, une guanamine, un aminotriazole, un hydrazide, un semicarbazide, le cyanoacétamide ou une polyamine aromatique.

4. Mélanges selon la revendication 3 dans lesquels le durcisseur (b) est le dihydrazide de l'acide isophthalique ou de l'acide adipique ou la 4,4'-diaminodiphénylsulfone.

5. Mélanges selon l'une des revendications précédentes dans lesquels le polymère phénolique répond à la formule II ci-dessous:

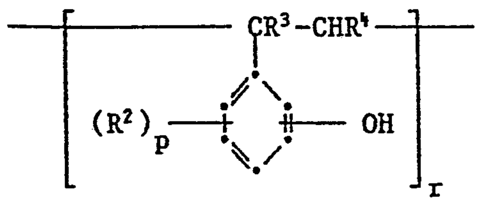

(II)

dans laquelle

$R^2$ désigne un atome d'halogène, un hydroxyle ou un groupe alkyle, alcoxy, aryle, aralkyle ou hydroxyaralkyle,

$R^3$ et $R^4$, qui peuvent identiques ou différents l'un de l'autre, sont chacun un atome d'hydrogène ou un alkyle à chaîne linéaire ou ramifiée en $C_1$ à $C_4$,

p est un nombre de 0 à 4, et

r un nombre qui donne une masse moléculaire moyenne du polymère de 1500 à 10000.

6. Mélanges selon la revendication 5 dans lesquels, dans la formule II,

$R^2$ est un atome d'halogène,

$R^3$ et $R^4$ sont chacun un atome d'hydrogène et

p est le nombre de 0 ou 1.

7. Mélanges selon l'une des revendications précédentes dans lesquels la base azotée de la solution solide (c) est une monoamine tertiaire ou secondaire, une diamine primaire ou secondaire, une diamine ou une triamine tertiaire, ou bien un mélange de polyamines ou un composé hétérocyclique azoté.

8. Mélanges selon la revendication 7 dans lesquels la base azotée a un point d'ébullition supérieur à 150 °C.

9. Mélanges selon la revendication 8 dans lesquels la base azotée est la benzyldiméthylamine, le 2,4,6-tris-(diméthylaminométhyl)-phénol, l'octyldiméthylamine, la triéthylène-tétramine, l'isophorone-diamine, le 2-(méthylamino)-éthanol, le 2-méthylimidazole, le benzimidazole, le 2-phénylimidazole, le 1-méthylimidazole, le 3-(diméthylamino)-1-propanol ou la N-(2-aminoéthyl)-pipérazine.

10. Mélanges selon l'une des revendications précédentes dans lesquels le rapport pondéral du polymère phénolique à la base azotée de la solution solide (c) est compris entre 0,8 et 4,0.

11. Procédé de collage de deux surfaces suivant lequel on applique sur l'une des surfaces ou sur les deux un mélange selon l'une quelconque des revendications 1 à 10, on assemble les surfaces l'une à l'autre et on chauffe l'ensemble jusqu'à ce que le mélange soit solidifié et consolidé.